(19) Europäisches Patentamt
European Patent Office
Office européen des brevets

(11) EP 2 405 513 A1

(12) EUROPEAN PATENT APPLICATION
published in accordance with Art. 153(4) EPC

(43) Date of publication:
11.01.2012 Bulletin 2012/02

(21) Application number: 10748544.3

(22) Date of filing: 05.03.2010

(51) Int Cl.:
H01M 4/62 (2006.01) H01M 4/13 (2010.01)

(86) International application number:
PCT/JP2010/001550

(87) International publication number:
WO 2010/100945 (10.09.2010 Gazette 2010/36)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 06.03.2009 JP 2009053527

(71) Applicant: I.S.T. Corporation
Otsu-shi
Shiga 520-2153 (JP)

(72) Inventors:
- MORIUCHI, Koji
Otsu-shi
Shiga 520-2153 (JP)
- TAKEDA, Yasuaki
Otsu-shi
Shiga 520-2153 (JP)

(74) Representative: Horn Kleimann Waitzhofer
Elsenheimerstrasse 65
80687 München (DE)

# (54) BINDER COMPOSITION FOR ELECTRODES AND ELECTRODE MIX SLURRY

(57) The object of the present invention is to offer a binder composition for electrodes with greater binding strength that does not inhibit the formation of a stable electrode interface (SEI) on the surface of the layer active material. The binder composition for electrodes relating to the present invention includes an ester compound derived from at least one type of tetracarboxylic acid, at least one type of compound having 3 or more amino groups, and an organic solvent. Furthermore, this binder composition for electrodes preferably contains at least one type of diamino compound. In addition, it is preferable to use a solvent with a boiling point ≤ 250 °C in this binder composition for electrodes.

Fig. 1

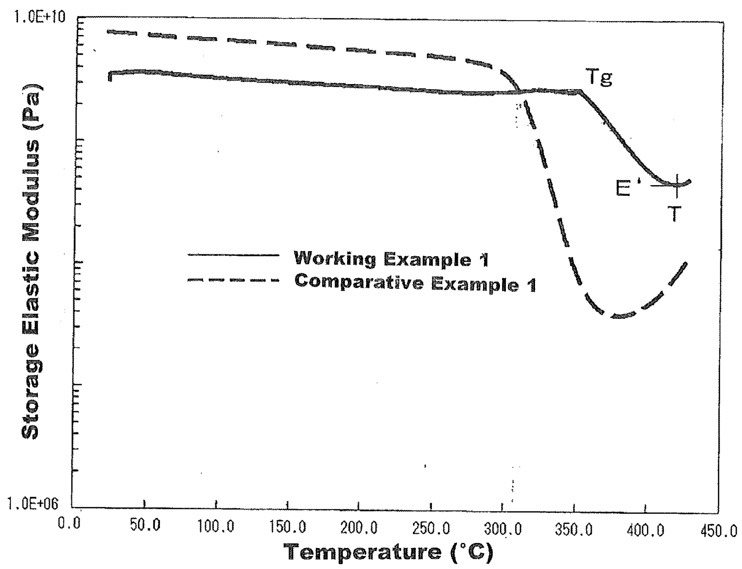




Printed by Jouve, 75001 PARIS (FR)

## Description

TECHNICAL FIELD

The present invention relates to a binder composition for electrodes and electrode mix slurry, and more specifically to a binder composition for electrodes and electrode mix slurry for a lithium ion battery.

BACKGROUND ART

Lithium ion batteries are secondary batteries in which discharging and charging can occur through the migration of lithium ions between a cathode and an anode. The lithium ion batteries are in general constituted primarily from a cathode that includes a metal oxide such as lithium cobalt oxide ($LiCoO_2$) or the like as the cathode active material, an anode that includes a carbon material such as graphite or the like as the anode active material, and an electrolytic solution that includes carbonates or the like as a solvent for dissolving an electrolyte.

Compared to batteries such as nickel-cadmium batteries, nickel-hydrogen batteries and the like, lithium ion batteries have a higher energy density and a higher discharge voltage. Thus, taking advantage of these features, lithium ion batteries can be designed to be more miniaturized and lightweight than other batteries. Moreover, lithium ion batteries also have advantages such as no memory effect, superior charge/discharge cycle characteristics, and the like. For this reason, lithium ion batteries have become essential for mobile devices, such as notebook computers, cellular telephones, portable game devices, digital cameras, personal digital assistants, and the like, for which miniaturization and being lightweight are important product values. As years go by, not only are mobile devices becoming miniaturized and lightweight, but also more sophisticated, for example One Seg and the like. Thus, mobile devices require batteries with more advantages such as higher capacity and higher performance.

Thus, in recent years, as an anode active material for implementing higher capacity batteries, tin and/or tin alloy or silicon and/or silicon alloy are expected to have the high storage/discharge capacity of lithium. An example of the most common industrial manufacturing method for anodes that can be named is the method of forming an anode layer on the surface of an anode current collector such as of copper using an anode mix slurry that includes the anode active material particles and a binder. The binder binds not only the active material particles but also the active material particles and the current collector. The binder is essential for preventing separation of the active material layer from the current collector.

Furthermore, normally, examples of binders used in the conventional carbon material anodes frequently used in industry that can be named include an N-methyl-2-pyrrolidone (NMP) solution of poly(vinylidene fluoride) (PVDF), and an aqueous dispersion of styrene-butadiene rubber (SBR).

However, while poly(vinylidene fluoride) (PVDF) is excellent as a binding agent that integrates with the carbon material particles, it has poor adhesion to a current collector metal such as copper or the like. For this reason, when batteries that have such carbon material anodes are repeatedly charged and discharged, the carbon material that is the active material separates from the current collector and the battery capacity is reduced, in other words there is a problem with shortened cycle life. On the other hand, if this problem is solved with a larger amount of binder, the internal space of the battery is limited, and a corresponding reduction in the amount of active material to be filled will lower the battery capacity, which ultimately leads to new problems.

On the other hand, the aqueous dispersion of styrene-butadiene rubber requires a thickening agent such as carboxymethylcellulose or the like to stabilize the dispersion of the active material particles. The thickening agent residues can easily be left on the anode, and it is essentially an insulator. For this reason, it is a problem in batteries with such carbon material anodes that the battery capacity cannot be sufficiently increased (for example, see Patent Documents 1 and 2).

In addition, the aforementioned silicon and/or silicon alloy have a different properties from graphite, and the volume of the aforementioned silicon and/or silicon alloy expands to 3 to 4 times its initial volume in charging. From this phenomenon, when a conventional binder is used, cracking and pulverization of the active material layer occurs due to the repeated expansion and contraction associated with charging and discharging in batteries, resulting in the problem that the charge/discharge cycle characteristics are spontaneously reduced and battery performance is diminished.

To solve this problem, the use of a polyimide resin as the binder is proposed in Patent Documents 3 and 4. However, if the aforementioned polymeric material is used as the binder, since it is easy for the polymeric material to coat the active material particles completely, there is a concern that it can inhibit the formation of a stable electrode interface (SEI) on the anode surface. Moreover, since the polymeric material is first and foremost an insulator, there is another problem in that the initial charge/discharge efficiency is decreased. By contrast, Patent Document 5 proposes a polyimide resin that is designed to be decomposable. In this Patent Document 5, by decomposing the polyimide resin, the initial charge/discharge efficiency can be higher because the electrolyte can more readily permeate to the anode, the stresses due to the expansion and contraction of the active material can be relieved by holes in the anode layer.

PRIOR ART LITERATURE

PATENT LITERATURE

[Patent Document 1] Japanese Published Unexamined Patent Application No. H 11-007948 (1999)
[Patent Document 2] Japanese Published Unexamined Patent Application No. 2001-210318
[Patent Document 3] Japanese Published Unexamined Patent Application No. 11-158277 (1999)
[Patent Document 4] WO 04/004031
[Patent Document 5] Japanese Published Unexamined Patent Application No. 2007-242405

SUMMARY OF THE INVENTION

PROBLEM TO BE SOLVED BY THE INVENTION

Taking account of the aforementioned problems, the object of the present invention is to offer a binder composition for electrodes with greater binding strength that does not inhibit the formation of a stable electrode interface (SEI) on the surface of the active material layer. In addition, the object of the present invention is to offer an electrode mix slurry that is a mixture of the active material and the binder composition for electrodes.

MEANS TO SOLVE THE PROBLEM

To solve the aforementioned problems, the present inventors took into account the results of careful research, and discovered that the aforementioned problems could be solved with a binder composition for electrodes that includes an ester compound derived from at least one type of tetracarboxylic acid, at least one type of "compound having 3 or more amino groups", and an organic solvent.

Specifically, the binder composition for electrodes recited in Claim 1 includes an ester compound derived from at least one type of tetracarboxylic acid (hereafter referred to as "tetracarboxylic acid ester compound"), at least one type of "compound having 3 or more amino groups", and an organic solvent.

The binder composition for electrodes recited in Claim 2 is the binder composition for electrodes as recited in Claim 1 that further includes at least one type of diamino compound.

The binder composition for electrodes recited in Claim 3 is the binder composition for electrodes as recited in Claim 1 or 2, wherein the tetracarboxylic acid ester compound is at least one type of tetracarboxylic acid ester compound selected from the group consisting of tetracarboxylic acid ester compounds represented by Chemical Formula (A) below wherein $R_1$, $R_2$, $R_3$, $R_4$ independently represent hydrogen, a C-1 to C-8 hydrocarbon group, which optionally has functional groups such as aromatic rings, -O-, -CO-, -OH, and the like, or a phenyl group, and R' represents Chemical Formula (A-1), Chemical Formula (A-2), or Chemical Formula (A-3),
wherein X represents O, S, $CH_2$, $C(CH_3)_2$, CO or a direct bond.

[Chemical structure 1]

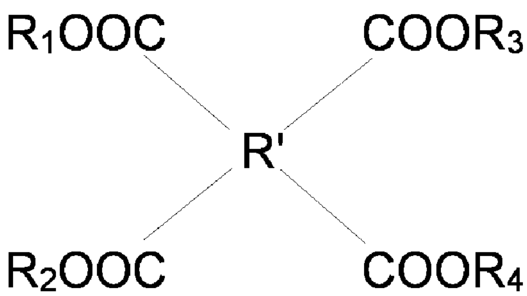

(A)

[Chemical structure 2]

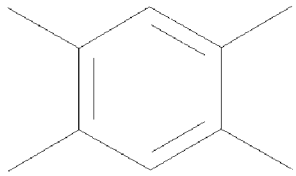

(A-1)

[Chemical structure 3]

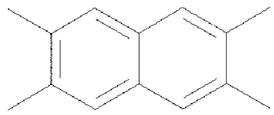

,

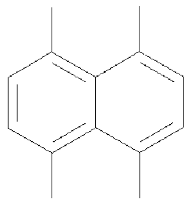

(A-2)

[Chemical structure 4]

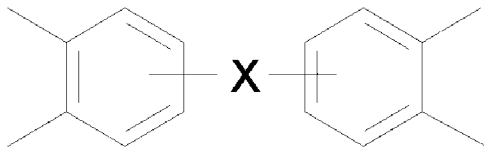

(A-3)

Moreover, the binder composition for electrodes recited in Claim 4 is the binder composition for electrodes as recited in any of Claims 1 through 3, wherein the compound having 3 or more amino groups is the compound having 3 or more amino groups directly bonded to an aromatic ring or a heterocyclic ring.

In addition, the binder composition for electrodes recited in Claim 5 is the binder composition for electrodes as recited in any of Claims 1 through 4, wherein the diamino compound is at least one type of diamino compound selected from the group consisting of diamino compounds represented by Chemical Formula (I) below,
wherein R" represents Chemical Formula (I-1), Chemical Formula (I-2), or Chemical Formula (I-3),
wherein Y represents O S, $C(CH_3)_2$, CO or a direct bond.

[Chemical structure 5] $H_2N- R''- NH_2$ (I)

[Chemical structure 6]

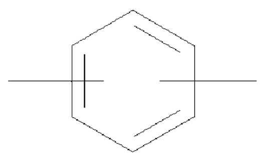

(I-1)

[Chemical structure 7]

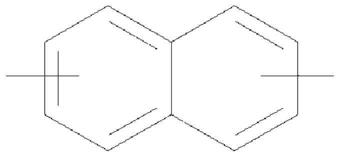

(I-2)

[Chemical structure 8]

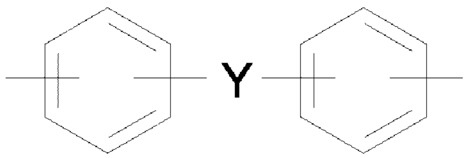

(I-3)

Moreover, the binder composition for electrodes recited in Claim 6 is the binder composition for electrodes as recited in any of Claims 1 through 5, wherein the organic solvent has a boiling point ≤ 250 °C.

Additionally, the binder composition for electrodes recited in Claim 7 is the binder composition for electrodes as recited in any of Claims 1 through 6, wherein the glass transition temperature (Tg) after baking is ≥ 300 °C.

In addition, the binder composition for electrodes recited in Claim 8 is the binder composition for electrodes as recited in any of Claims 1 through 7, wherein the molecular weight between cross-links (Mx) after baking is ≤ 150 g/mol. Furthermore, the molecular weight between cross-links (Mx) after baking is preferably ≥ 10 g/mol and ≤ 150 g/mol, and more preferably ≥ 50 g/mol and ≤ 100 g/mol.

Next, an electrode mix slurry recited in Claim 9 is a blend (mixture) of at least one active material in a binder composition for electrodes as recited in any of Claims 1 through 8.

EFFECT OF THE INVENTION

A binder composition for electrodes according to the present invention is a monomer type that is not a polymer type such as in conventional binder compositions. Thus, since this binder composition for electrodes contains a compound that has ≥ 3 amino groups, the polymerization process will produce a mesh structure that exhibits strong adhesiveness toward current collector metals such as copper, and can bind the anode active material to the current collector metal. For this reason, it is also more difficult for cracking and pulverization of the active material layer due to the repeated expansion and contraction associated with charging/discharging to occur in the active material layer for electrodes. Moreover, this binder composition for electrodes does not completely coat the active material and does not inhibit the formation of a stable electrode interface (SEI) on the surface of the active material layer, and a smaller amount can bind the active material particles. In addition, since this binder composition for electrodes becomes a polyimide while generating alcohol during drying and/or sintering, suitably-sized holes are formed in the anode layer. For this reason, the stresses from the expansion and contraction of the anode active material layer can be relieved when this binder composition for electrodes is used. Consequently, this binder composition for electrodes can provide an electrode that exhibits high initial charge/discharge efficiency and charge/discharge cycle characteristics. In addition, the use of "an organic solvent with a boiling point ≤ 250 °C" as the solvent in this binder composition for electrodes can lower solvent residues sufficiently after baking.

BRIEF EXPLANATION OF DIAGRAMS

[Figure 1] This figure is a graph that shows the results of dynamic viscoelasticity measurements made on Working Example 1 and Comparative Example 1.

MODES FOR IMPLEMENTING THE INVENTION

Specifically, the binder composition for electrodes includes an ester compound derived from at least one type of tetracarboxylic acid (hereafter referred to as "tetracarboxylic acid ester compound"), at least one type of "compound

having 3 or more amino groups", and an organic solvent.

The tetracarboxylic acid ester compound used in the binder composition for electrodes of the present invention can readily be obtained by esterification of the corresponding tetracarboxylic acid dianhydride with alcohols. The esterification is preferably carried out at a temperature of 50-150 °C. In addition, if necessary during the esterification, an esterification catalyst such as dimethylaminopyridine, triethylamine, or the like can optionally be added.

Moreover, examples of tetracarboxylic acid dianhydrides to be used in deriving the tetracarboxylic acid ester compounds that can be named include pyromellitic acid dianhydride (PMDA), 1,2,5,6-naphthalenetetracarboxylic acid dianhydride, 1,4,5,8-naphthalenetetracarboxylic acid dianhydride, 2,3,6,7-naphthalenetetracarboxylic acid dianhydride, 2,2',3,3'-biphenyltetracarboxylic acid dianhydride, 2,3,3',4'-biphenyltetracarboxylic acid dianhydride (a-BPDA), 3,3',4,4'-biphenyltetracarboxylic acid dianhydride (BPDA), 2,2',3,3'-benzophenonetetracarboxylic acid dianhydride, 2,3,3',4'-benzophenonetetracarboxylic acid dianhydride, 3,3',4,4'-benzophenonetetracarboxylic acid dianhydride (BTDA), bis-(2,3-dicarboxyphenyl)methane dianhydride, bis-(3,4-dicarboxyphenyl)methane dianhydride, 1,1-bis-(2,3-dicarboxyphenyl) ethane dianhydride, 1,1-bis-(3,4-dicarboxyphenyl)ethane dianhydride, 2,2-bis-[3,4-(dicarboxyphenoxy)phenyl]propane dianhydride (BPADA), 4,4'-(hexafluoroisopropylidene)diphthalic dianhydride, oxydiphthalic anhydride (ODPA), thiodiphthalic anhydride, 3,4,9,10-perylenetetracarboxylic acid dianhydride, 2,3,6,7-anthracenetetracarboxylic acid dianhydride, 1,2,7,8-phenanthrolinetetracarboxylic acid dianhydride, 9,9-bis-(3,4-dicarboxyphenyl)fluorene dianhydride, 9,9-bis-[4-(3,4'-dicarboxyphenoxy)phenyl]fluorene dianhydride and the like. Furthermore, among these, pyromellitic acid dianhydride (PMDA), 3,3',4,4'-biphenyltetracarboxylic acid dianhydride (BPDA), 2,3,3',4'-biphenyltetracarboxylic acid dianhydride (a-BPDA), 3,3',4,4'-benzophenonetetracarboxylic acid dianhydride (BTDA) are preferred. In addition, these tetracarboxylic acid dianhydrides can optionally be used singly or in mixtures of 2 or more types.

Examples of alcohols that can be named include methanol, ethanol, 1-propanol, 2-propanol, 1-butanol, 2-butanol, 2-methyl-1-propanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, 2,2-dimethyl-1-propanol, 1-hexanol, 2-methyl-1-pentanol, 4-methyl-2-pentanol, 2-ethyl-1-butanol, cyclohexanol, 2-methoxyethanol, 2-ethoxyethanol, 2-(methoxymethoxy)ethanol, 2-isopropoxyethanol, 2-butoxyethanol, 2-phenylethanol, 1-phenyl-1-hydroxyethane, 2-phenoxyethanol, and the like. In addition, examples of polyvalent alcohols as the alcohol that can be named include 1,2-ethanediol, 1,2-propanediol, 1,3-propanediol, 1,3-butanediol, 1,4-butanediol, 2,3-butanediol, 1,5-pentanediol, 2-methyl-2,4-pentanediol, 2,2'-dihydroxydiethylether, 2-(2-methoxyethoxy)ethanol, 2-(2-ethoxyethoxy)ethanol, 1-methoxy-2-propanol, 1-ethoxy-2-propanol, dipropylene glycol, and the like. In addition, these alcohols can optionally be used singly or in mixtures of 2 or more types.

Examples of the "compound having 3 or more amino groups" that can be named include 1,3,5-triaminobenzene, 1,3,5-tris-(4-aminophenyl)benzene, 3,4,4'-triaminodiphenyl ether, 2,4,6-triaminopyrimidine (TAP), 6-phenylbuterizine-2,4,7-triamine, tris-(4-aminophenyl)methanol, melamine, 2',4',4-triaminobenzanilide, 2,5,6-triamino-3-methylpyrimidine-4(3H)-one, 1,4,5,8-tetraaminoanthraquinone, 3,3'-diaminobenzidine, and the like. Furthermore, among these, 2,4,6-triaminopyrimidine (TAP) and tris-(4-aminophenyl)methanol are preferred. In addition, these amino compounds can optionally be used singly or in mixtures of 2 or more types.

Examples of diamines that are suitable for use in the present invention that can be named include para-phenylenediamine (PPD), meta-phenylenediamine (MPDA), 2,5-diaminotoluene, 2,6-diaminotoluene, 4,4'-diaminobiphenyl, 3,3'-dimethyl-4,4'-biphenyl, 3,3'-dimethoxy-4,4'-biphenyl, 2,2'-bis(trifluoromethyl)-4,4'-diaminobiphenyl, 3,3'-diaminodiphenylmethane, 4,4'-diaminodiphenylmethane (MDA), 2,2-bis-(4-aminophenyl)propane, 3,3'-diaminodiphenylsulfide, 4,4'-diaminodiphenylsulfide, 3,3'-diaminodiphenyl ether, 3,4'-diaminodiphenyl ether (34ODA), 4,4'-diaminodiphenyl ether (ODA), 1,5-diaminonaphthalene, 4,4'-diaminodiphenyldiethylsilane, 4,4'-diaminodiphenylsilane, 4,4'-diaminodiphenylethylphosphine oxide, 1,3-bis-(3-aminophenoxy)benzene (133APB), 1,3-bis-(4-aminophenoxy)benzene (134APB), 1,4-bis-(4-aminophenoxy)benzene, 2,2-bis-[4-(4-aminophenoxy)phenyl]propane (BAPP), 2,2-bis-(3-aminophenyl)-1,1,1,3,3,3-hexafluoropropane, 2,2-bis-(4-aminophenyl)-1,1,1,3,3,3-hexafluoropropane, 9,9-bis-(4-aminophenyl)fluorene and the like. In addition, these diamino compounds can optionally be used singly or in mixtures of 2 or more types. Furthermore, among these, para-phenylenediamine (PPD), meta-phenylenediamine (MPDA), 4,4'-diaminodiphenylmethane (MDA), 3,4'-diaminodiphenyl ether (34ODA), 4,4'-diaminodiphenyl ether (ODA), 1,3-bis-(3-aminophenoxy)benzene (133APB), 1,3-bis-(4-aminophenoxy)benzene (134APB), and 2,2-bis-[4-(4-aminophenoxy)phenyl] propane (BAPP) are preferred.

The organic solvent can be any organic solvent that can dissolve the tetracarboxylic acid ester compound, the compound having 3 or more amino groups and the diamino compound. Furthermore, among these, organic solvents that have a boiling point ≤ 250 °C are preferred. The reason is because residual organic solvent is unlikely to be left on the electrode when the organic solvent has a boiling point ≤ 250 °C. Moreover, organic solvents with a boiling point ≤ 225 °C are further preferred. Examples of organic solvents that can be named include amides such as N-methyl-2-pyrrolidone (boiling point 202 °C), N,N-dimethylacetamide (boiling point 166 °C), N-methylacetamide (boiling point 206 °C), acetamide (boiling point 221 °C), N,N-diethylformamide (boiling point 177 °C), N,N-dimethylformamide (boiling point 153 °C), N-methylformamide (boiling point 183 °C), and the like, alcohols such as methanol (boiling point 65 °C), ethanol (boiling point 78 °C), 1-propanol (boiling point 97 °C), 2-propanol (boiling point 82 °C), 1-butanol (boiling point 118 °C),

2-butanol (boiling point 100 °C), 2-methyl-1-propanol (boiling point 108 °C), 2-methyl-2-propanol (boiling point 83 °C), 1-pentanol (boiling point 138 °C), 2-pentanol (boiling point 119 °C), 3-pentanol (boiling point 116 °C), 2-methyl-1-butanol (boiling point 128 °C), 3-methyl-1-butanol (boiling point 131 °C), 2-methyl-2-butanol (boiling point 102 °C), 3-methyl-2-butanol (boiling point 112 °C), 2,2-dimethyl-1-propanol (boiling point 114 °C), 1-hexanol (boiling point 157 °C), 2-methyl-1-pentanol (boiling point 148 °C), 4-methyl-2-pentanol (boiling point 132 °C), 2-ethyl-1-butanol (boiling point 147 °C), cyclohexanol (boiling point 161 °C), 2-methoxyethanol (boiling point 125 °C), 2-ethoxyethanol (boiling point 136 °C), 2-isopropoxyethanol (boiling point 139-143 °C), 2-butoxyethanol (boiling point 170 °C), 2-phenylethanol (boiling point 220 °C), 2-phenoxyethanol (boiling point 245 °C), and the like, furthermore, polyvalent alcohols such as 1,2-ethanediol (boiling point 198 °C), 1,2-propanediol (boiling point 187 °C), 1,3-propanediol (boiling point 214 °C), 1,3-butanediol (boiling point 191 °C), 1,4-butanediol (boiling point 229 °C), 2,3-butanediol (boiling point 182 °C), 1,5-pentanediol (boiling point 242 °C), 2-methyl-2,4-pentanediol (boiling point 197 °C), 2,2'-dihydroxydiethyl ether (boiling point 245 °C), 2-(2-methoxyethoxy)ethanol (boiling point 194 °C), 2-(2-ethoxyethoxy)ethanol (boiling point 202 °C), 1-methoxy-2-propanol (boiling point 120 °C), 1-ethoxy-2-propanol (boiling point 132 °C), dipropylene glycol (boiling point 232 °C), and the like, ethers such as 1,2-dimethoxyethane (monoglyme, boiling point 85 °C), 1,2-diethoxyethane (boiling point 121 °C), 1,2-dibutoxyethane (boiling point 203 °C), bis-(2-methoxyethyl) ether (diglyme, boiling point 160 °C), bis-(2-ethoxyethyl) ether (boiling point 188 °C), tetrahydrofuran (boiling point 66 °C), dioxane (boiling point 101 °C), and the like, esters such as ethyl acetate (boiling point 77 °C), propyl acetate (boiling point 102 °C), butyl acetate (boiling point 126 °C), γ-butyrolactone (boiling point 204 °C), and carbonate esters such as dimethyl carbonate (boiling point 90 °C), ethyl methyl carbonate (boiling point 107 °C), diethyl carbonate (boiling point 126 °C), ethylene carbonate (boiling point 238 °C), propylene carbonate (boiling point 242 °C), butylene carbonate (boiling point 240 °C), and the like. In addition, these organic solvents can optionally be used singly or in mixtures of 2 or more types.

From the above-mentioned, the binder composition for electrodes relating to the present invention is a monomer type that is not a polymer type such as the poly(vinylidene fluoride) or styrene-butadiene copolymer of conventional binder compositions for electrodes. For this reason, since this binder composition for electrodes becomes a polyimide while generating alcohol during drying and/or sintering, suitably-sized holes are formed in the anode layer. Thus, when this binder composition for electrodes is used, the stresses from the expansion and contraction of the anode active material can be relieved. This binder composition for electrodes is baked to give a polyimide with a glass transition temperature (Tg) of ≥ 300 °C. This is preferable for relieving the stresses from the expansion and contraction of the anode active material. Moreover, since this binder composition for electrodes contains a compound that has ≥ 3 amino groups, the polymerization process will produce a mesh structure that exhibits strong adhesiveness toward current collector metals such as copper, and can bind the anode active material to the current collector metal. In addition, if the molecular weight between cross-links (Mx) is ≤ 150 g/mol, the resin component in the binder composition for electrodes will exhibit good adhesion toward current collector metals such as copper. Moreover, if the molecular weight between cross-links (Mx) is ≤ 100 g/mol, the resin component in the binder composition for electrodes will exhibit even better adhesive strength toward current collector metals such as copper. For this reason, when this binder composition for electrodes is used, it will also be more difficult for cracking and pulverization to occur in the active material layer due to the repeated expansion and contraction associated with charging/discharging.

In addition, there is no particular limitation on the solids content of the binder composition for electrodes of the present invention, but higher is preferred because it can reduce the amount of solvent used in the manufacture of the electrode mix slurry and the concentration can be adjusted. The solids content of the binder composition for electrodes is preferably ≥ 10 wt%, more preferably ≥ 20 wt%, and further preferably ≥ 30 wt%.

Moreover, the electrode mix slurry of the present invention is obtained by blending particles of active material into the binder composition for electrodes of the present invention.

There is no particular limitation on the particles of active material that can be used in the electrode mix slurry of the present invention, but examples of the particles of active material used in the anode mix slurry that can be named include graphite, mesocarbon microbeads (MCMBs), tin and/or tin alloy, silicon and/or silicon alloy, and the like. When the particles of active material for anode (hereafter referred to as "anode active material particles") are an alloy, the electrode mix slurry can contain materials that are alloyed with lithium. Examples of materials that are alloyed with lithium that can be named here include germanium, tin, lead, zinc, magnesium, sodium, aluminum, gallium, indium, alloys thereof, and the like. However, to increase the capacity of batteries, the anode active material particles are preferably silicon and/or a silicon alloy, and more preferably silicon. Examples of the particles of active material for cathode that can be used include lithium-containing transition metal oxides such as $LiCoO_2$ $LiNiO_2$, $LiMn_2O_4$, $LiMnO_2$, $LiCo_{0.5}Ni_{0.5}O_2$, $LiNi_{0.7}Co_{0.2}Mn_{0.1}O_2$, or non-lithium-containing metal oxides such as $MnO_2$ and the like.

There is no particular limitation on the mean particle diameter of the anode active material particles, but is preferably ≥ 10 μm and ≤ 20 μm. If the particle diameter of the anode active material particles is greater, the resistance between the anode active material particles and the anode current collector will be reduced on the one hand, and stresses due to changes in the volume of the anode active material particles during charging/discharging will act to make the active material layer separate from the anode current collector occur more readily, while conversely if the particle diameter

of the anode active material particles is less, the surface area per unit weight of the anode active material particles will increase, the surface area in contact with the non-aqueous electrolytic solution will increase leading to an increase in irreversible reaction and a decrease in capacity.

In the electrode mix slurry of the present invention, with a smaller amount of binder becomes on the one hand, there will be difficulties in maintaining sufficient anode active material in the anode layer and in adequately increasing the adhesiveness between the anode layer and the anode current collector, and with a greater amount of binder, the resistance of the anode will increase and the initial charging will be difficult. For these reasons, the amount of binder with respect to the active material is preferably ≥ 5 wt% and ≤ 50 wt%.

To improve the current collecting characteristics in the anode, a conductive powder can be added to the anode mix slurry. The use of a conductive carbon material or a conductive metal that is the same as anode current collector mentioned below is preferred as the conductive powder. Examples of conductive carbon materials that can be named include graphite, artificial graphite such as MCMBs, carbon nanotubes and the like. Examples of conductive metals that can be named include metals such as copper, nickel, iron, titanium, cobalt and the like, and alloys thereof.

There is no particular limitation on the viscosity of the electrode mix slurry of the present invention, but it is preferably ≥ 1 poise and ≤ 500 poise. This is for the ease of a coating operation with the electrode mix slurry.

The surface roughness (Ra) of an anode current collector for use in the present invention is preferably ≥ 0.1 μm. In this way, with a surface roughness (Ra) of the anode current collector ≥ 0.1 μm, greater anchoring efficiency due to the binder can be obtained when the anode layer is formed on the anode current collector, and the adhesiveness of the anode layer toward the anode current collector will thus be greatly increased.

In addition, examples of the material for this anode current collector are metals such as copper, nickel, iron, titanium, cobalt, and the like, and alloys thereof can be used. Specifically, the use of a metal foil that includes elemental copper is more preferable as the anode current collector material, and the use of copper foil or a copper alloy foil is further preferable. Furthermore, for the abovementioned metal foil that contains elemental copper, a layer containing the elemental copper can also be formed on the surface of a metal foil composed of a metallic element other than copper.

Moreover, while there is no particular limitation on the thickness of the abovementioned anode current collector, it is normally in the range of 10 μm -100 μm.

While there is no particular limitation regarding the method for coating the electrode mix slurry of the present invention onto the current collector, the die-coating method is preferred. Furthermore, after the electrode mix slurry is die-coated, it has dried until it can be rolled, which will result in the formation of an electrode mix layer. In addition, the anode mix layer formed on the anode current collector is rolled subsequently. When the anode mix layer is rolled in this manner, along with increasing the energy density of the battery by increasing the density of the anode mix layer, some of the anode active material particles are embedded in the anode current collector, and the adhesive surface between the anode mix layer and the anode current collector will be increased. This results in an increase in the adhesiveness of the anode mix layer toward the anode current collector, so that the anode mix layer also adheres sufficiently to the anode current collector without roughening of the surface.

For the binder to be converted into polyimide, the process temperature during the sintering process for the electrode mix slurry is preferably 200-500 °C, and is more preferably 300-450 °C. Moreover, this sintering process is preferably carried out under a non-oxidizing atmosphere. Examples of non-oxidizing atmospheres that can be named include an inert gas atmosphere such as argon atmosphere or the like, a nitrogen gas atmosphere, and a vacuum atmosphere. In addition, a reducing atmosphere such as a hydrogen atmosphere is also satisfactory. Furthermore, among these, the use of an inert gas atmosphere such as argon atmosphere or the like is preferable. A discharge plasma sintering method or a hot pressing method can optionally be used as the sintering method. Moreover, when the anode undergoes the sintering process, the element of the current collector can optionally be diffused into the active material particles of the active material layer by the sintering process. Specifically, when elemental copper in contained in the current collector surface, the elemental copper of the current collector can optionally be diffused into the active material particles, and this can increase the adhesiveness between the current collector and the active material layer.

The present invention is explained in detail below using working examples. Working Example 1

(Preparation of the binder composition)

A 500 mL 3-neck flask was equipped with a stirring rod which was fitted with a polytetrafluoroethylene stir paddle to set up the synthesis vessel. This synthesis vessel was then charged with 109.53 g (0.340 mol) of 3,3',4,4'-benzophenonetetracarboxylic acid dianhydride (BTDA), 45.85 g (1.02 mol) of ethanol, and 113.20 g of N-methylpyrrolidone (NMP) so that a polyimide precursor solution can have a 43 wt% solids content that included, and this mixture was heated to 80 °C and stirred for 2 hours to yield a BTDA ester compound solution. Next, after the BTDA ester compound solution was cooled to below 40 °C, 15.79 g (0.136 mol) of meta-phenylenediamine (MPDA) and 18.27 g (0.136 mol) of 2,4,6-triaminopyrimidine (TAP) were added to the synthesis vessel, which was again heated to 80 °C and stirred for 3 hours to yield a polyimide precursor solution. Subsequently, this polyimide precursor solution was filtered

through a #300 SUS mesh to yield the binder composition for electrodes. The viscosity of this binder composition for electrodes was 173 poise.

(Preparation of the anode)

Next, an electrode mix slurry was prepared by adding the binder composition for electrodes to silicon powder as the active material to give a binder composition for electrodes with 10 wt% of active material. Then, after this electrode mix slurry was coated onto an 18-μm thick rolled copper foil (manufactured by Nihon Copper Foil, Ltd) and dried, this rolled copper foil was compression molded using a roller press machine. Subsequently, this rolled copper foil was heated at 400 °C for 6 hours under a vacuum atmosphere to form a mix layer on the rolled copper foil. This mix layer was a foam that was firmly fixed to the rolled copper foil.

(Physical measurements)

The binder composition for electrodes was cast onto a glass plate, and after the glass plate upon which this binder composition for electrodes was cast was placed in a baking furnace, the temperature of the baking furnace was gradually raised, and the binder composition for electrodes was baked at a final temperature of 350 °C for 1 hour to give a piece of film of the binder composition for electrodes. Then, a Seiko Instruments EXSTAR 6000 dynamic viscoelasticity measuring device was used to measure the following properties for this piece of film under conditions of a measuring frequency of 1 Hz and a temperature increase rate of 2 °C/min:

(1) Glass transition temperature (Tg)

As shown in Figure 1, the glass transition temperature (Tg) is the temperature that corresponds to the intersection point between an extrapolation from the low-temperature, straight-line portion of the storage modulus curve, and the tangent at the point considered to have the maximum slope in the glass transition region of the curve. Furthermore, the glass transition temperature (Tg) for the piece of film in this working example was 356 °C.

( 2 ) Molecular weight between cross-links (Mx)

The molecular weight between cross-links (Mx) is determined by the following formula (1):

$$Mx = \rho RT/E' \quad (1)$$

Furthermore, in Formula (1), ρ is the density of the resin, which in this working example is 1.3 g/cm$^3$. T is the absolute temperature at the point where the storage elastic modulus is extremely small. E' is the storage elastic modulus at the extremely small point. R is the gas constant.
Furthermore, the molecular weight between cross-links for the piece of film in this working example is 16 g/mol.

Working Example 2

With the exceptions of the amount of BTDA added being replaced with 107.66 g (0.334 mol), the amount of ethanol added being replaced with 46.18 g (1.00 mol), the amount of NMP added being replaced with 112.79 g, the amount of MPDA added being replaced with 24.09 g (0.223 mol), and the amount of TAP added being replaced with 9.29 g (0.074 mol), the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 60 poise. Moreover, the glass transition temperature (Tg) for a piece of film prepared using this binder composition for electrodes was 324 °C. In addition, the molecular weight between cross-links for the same film was 48 g/mol. Additionally, this anode mix layer was a foam that was firmly fixed to the rolled copper foil.

Working Example 3

With the exceptions of the amount of BTDA added being replaced with 106.36 g (0.330 mol), the amount of ethanol added being replaced with 45.62 g (0.990 mol), the amount of NMP added being replaced with 113.49 g, as the

amount of MPDA added being replaced with 30.60 g (0.283 mol), and the amount of TAP added being replaced with 3.93 g (0.031 mol), the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 47 poise. Moreover, the glass transition temperature (Tg) for a piece of film prepared using this binder composition for electrodes was 306 °C. In addition, the molecular weight between cross-links for the same film was 92 g/mol. Additionally, this anode mix layer was a foam that was firmly fixed to the rolled copper foil.

Working Example 4

With the exceptions of the amount of BTDA added being replaced with 104.61 g (0.325 mol), the amount of ethanol added being replaced with 89.74 g (1.948 mol), the amount of NMP added being replaced with 78.56 g, and the amount of TAP added being replaced with 27.08 g (0.216 mol), the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 12 poise. Moreover, the glass transition temperature (Tg) for a piece of film prepared using this binder composition for electrodes was 366 °C. In addition, the molecular weight between cross-links for the same film was 14 g/mol. Additionally, this anode mix layer was a foam that was firmly fixed to the rolled copper foil.

Working Example 5

With the exceptions of the amount of BTDA added being replaced with 84.87 g (0.263 mol), the amount of ethanol added being replaced with 36.40 g (0.790 mol), the amount of NMP added being replaced with 125.11 g, and the 15.79 g (0.136 mol) of MPDA and 18.27 g (0.136 mol) of TAP being replaced with 53.62 g (0.176 mol) of tris-(4-aminophenyl)methanol, the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 109 poise. Moreover, the glass transition temperature (Tg) for a piece of film prepared using this binder composition for electrodes was 329 °C. In addition, the molecular weight between cross-links for the same film was 25 g/mol. Additionally, this anode mix layer was a foam that was firmly fixed to the rolled copper foil.

Working Example 6

With the exceptions of the amount of BTDA added being replaced with 100.26 g (0.311 mol), the amount of ethanol added being replaced with 43.00 g (0.934 mol), the amount of NMP added being replaced with 116.79 g, the amount of MPDA added being replaced with 22.43 g (0.207 mol), and the 18.27 g (0.0136 mol) of TAP being replaced with 17.52 g (0.069 mol) of 6-phenylbuterizine-2,4,7-triamine, the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 75 poise. Moreover, the glass transition temperature (Tg) for a piece of film prepared using this binder composition for electrodes was 318 °C. In addition, the molecular weight between cross-links for the same film was 56 g/mol. Additionally, this anode mix layer was a foam that was firmly fixed to the rolled copper foil.

Working Example 7

With the exceptions of the amount of BTDA added being replaced with 102.70 g (0.319 mol), the amount of ethanol added being replaced with 44.05 g (0.956 mol), the amount of NMP added being replaced with 115.47 g, the amount of MPDA added being replaced with 20.68 g (0.191 mol), and the 18.27 g (0.136 mol) of TAP being replaced with 17.10 g (0.064 mol) of 1,4,5,8-tetraaminoanthraquinone, the binder composition for electrodes was prepared and subsequently the anode was prepared in the same manner as in Working Example 1, and the physical property measurements were conducted in the same manner as in Working Example 1.
Furthermore, the viscosity of the binder composition for electrodes relating to this working example was 125 poise. Moreover, the glass transition temperature (Tg) for a piece of film prepared using this binder composition for electrodes was 331 °C. In addition, the molecular weight between cross-links for the same film was 37 g/mol. Additionally, this

anode mix layer was a foam that was firmly fixed to the rolled copper foil.

Working Example 8

With the exceptions of the amount of BTDA added being replaced with 107.66 g (0.334 mol), the amount of NMP added being replaced with 96.75 g, the amount of MPDA added being replaced with 24.09 g (0.223 mol), the amount of TAP added being replaced with 9.29 g (0.074 mol), and the 45.85 g (1.02 mol) of ethanol being replaced with 62.22 g (1.00 mol) of 1,2-ethanediol, the binder composition for electrodes was prepared and subsequently the anode was prepared in the same manner as in Working Example 1, and the physical property measurements were conducted in the same manner as in Working Example 1.

Furthermore, the viscosity of the binder composition for electrodes relating to this working example was 280 poise. Moreover, the glass transition temperature (Tg) for a piece of film prepared using this binder composition for electrodes was 322 °C. In addition, the molecular weight between cross-links for the same film was 47 g/mol. Additionally, this anode mix layer was a foam that was firmly fixed to the rolled copper foil.

INDUSTRIAL APPLICABILITY

The binder composition for electrodes of the present invention has the characteristics of greater binding strength compared to conventional binder compositions for electrodes, and does not inhibit the formation of a stable electrode interface (SEI) on the surface of the active material layer, specifically, it is useful as a binding agent because the anode active material particles can be bound to the anode current collector in high-capacity batteries such as lithium ion batteries and the like.

## Claims

1. Binder composition for electrodes comprising:

   an ester compound derived from at least one type of tetracarboxylic acid (which is referred to below as "tetracarboxylic acid ester compound"), and
   at least one type of compound having 3 or more amino groups, and
   an organic solvent.

2. The binder composition for electrodes as recited in Claim 1 further comprising at least one type of diamino compound.

3. The binder composition for electrodes as recited in Claim 1 or 2, wherein the tetracarboxylic acid ester compound is at least one type of tetracarboxylic acid ester compound selected from the group consisting of tetracarboxylic acid ester compounds represented by Chemical Formula (A) below,
   wherein $R_1$, $R_2$, $R_3$, $R_4$ independently represent hydrogen, a C-1 to C-8 hydrocarbon group, which optionally has functional groups such as aromatic rings, -O-, -CO-, -OH, and the like, or a phenyl group, and R' represents Chemical Formula (A-1), Chemical Formula (A-2), or Chemical Formula (A-3),
   wherein X represents O, S, $CH_2$, $C(CH_3)_2$, CO or a direct bond.

[Chemical structure 1]

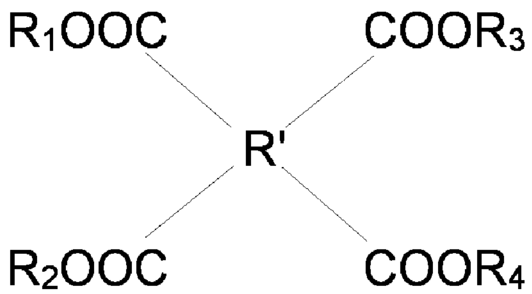

(A)

[Chemical structure 2]

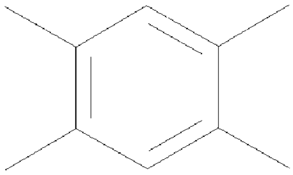

(A-1)

[Chemical structure 3]

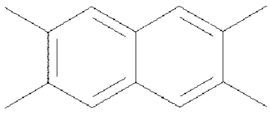

,

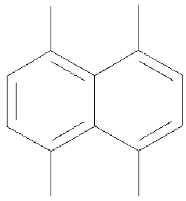

(A-2)

[Chemical structure 4]

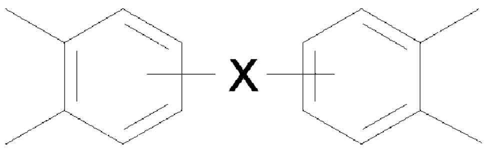

(A-3)

**4.** The binder composition for electrodes as recited in any of Claims 1 through 3, wherein the compound having 3 or more amino groups is directly bonded to an aromatic ring or a heterocyclic ring.

**5.** The binder composition for electrodes as recited in any of Claims 1 through 4, wherein the diamino compound is at least one type of diamino compound selected from the group consisting of diamino compounds represented by Chemical Formula (I) below
wherein R" represents Chemical Formula (I-1), Chemical Formula (I-2), or Chemical Formula (I-3)
wherein Y represents O, S, $C(CH_3)_2$, CO or a direct bond.

$H_2N$-R"-$NH_2$ (I)

[Chemical structure 6]

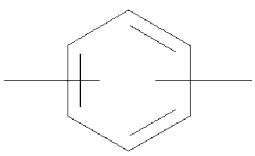

(I-1)

[Chemical structure 7]

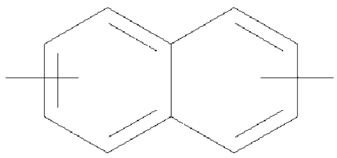

(I-2)

[Chemical structure 8]

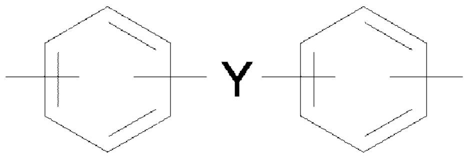

(I-3)

**6.** The binder composition for electrodes as recited in any of Claims 1 through 5, wherein the organic solvent has a boiling point ≤250 °C.

**7.** The binder composition for electrodes as recited in any of Claims 1 through 6, wherein the glass transition temperature (Tg) after baking is ≥ 300 °C.

**8.** The binder composition for electrodes as recited in any of Claims 1 through 7, wherein the molecular weight between cross-links (Mx) after baking is ≤ 150 g/mol.

**9.** An electrode mix slurry in which at least one active material is mixed into a binder composition for electrodes as recited in any of Claims 1 through 8.

Fig. 1

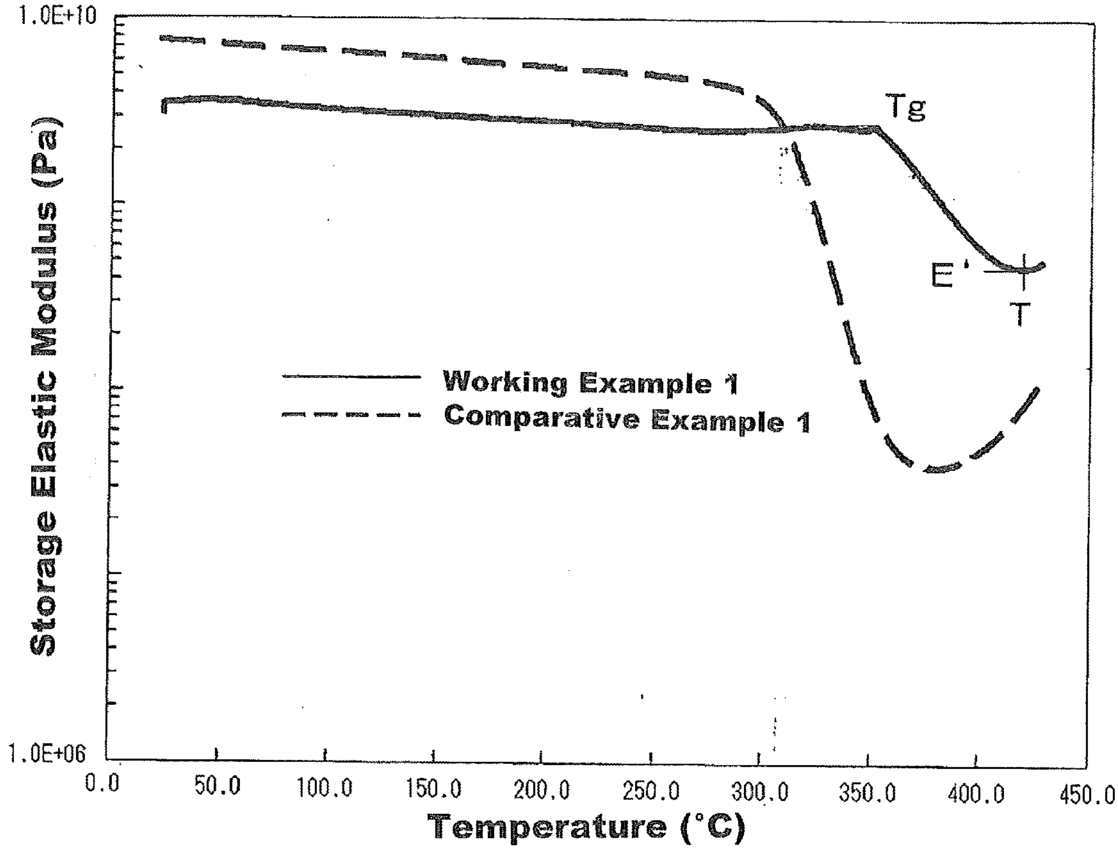
1.0E+10
1.0E+06
Storage Elastic Modulus (Pa)
0.0
50.0
100.0
150.0
200.0
250.0
300.0
350.0
400.0
450.0
Temperature (°C)
Working Example 1
Comparative Example 1
Tg
E'
T

**INTERNATIONAL SEARCH REPORT**

International application No.
PCT/JP2010/001550

A. CLASSIFICATION OF SUBJECT MATTER
*H01M4/62*(2006.01)i, *H01M4/13*(2010.01)i

According to International Patent Classification (IPC) or to both national classification and IPC

B. FIELDS SEARCHED

Minimum documentation searched (classification system followed by classification symbols)
H01M4/62, H01M4/13

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-339092 A (Matsushita Electric Industrial Co., Ltd.), 14 December 2006 (14.12.2006), claims; paragraphs [0009] to [0038] & US 2007/0099081 A1 | 1-9 |
| A | JP 2006-253450 A (Nisshinbo Industries, Inc.), 21 September 2006 (21.09.2006), claims; paragraphs [0006] to [0034] (Family: none) | 1-9 |
| A | JP 9-110954 A (Dainippon Ink And Chemicals, Inc.), 28 April 1997 (28.04.1997), claims; paragraphs [0001] to [0017] (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>05 April, 2010 (05.04.10) | Date of mailing of the international search report<br>20 April, 2010 (20.04.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/001550

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-82726 A (Yamaguchi Technology Licensing Organization, Ltd.), 31 March 2005 (31.03.2005), claims; paragraphs [0003] to [0062] (Family: none) | 1-9 |
| A | JP 2004-107484 A (Kaneka Corp.), 08 April 2004 (08.04.2004), claims; paragraphs [0010] to [0061] (Family: none) | 1-9 |
| A | JP 2002-105199 A (Kaneka Corp.), 10 April 2002 (10.04.2002), claims; paragraphs [0006] to [0062] (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11007948 B
- JP 2001210318 A
- JP 11158277 A
- WO 04004031 A
- JP 2007242405 A